# EUROPÄISCHE PATENTANMELDUNG

(11) **EP 1 762 732 A1**
(43) Veröffentlichungstag der Anmeldung: **14.03.2007**
(21) Anmeldenummer: 06022371.6
(22) Anmeldetag: 01.10.2001
(51) Int. Cl.: F16C 9/02, F16C 17/10, F16C 33/14

(54) **Kurbelwellenlager**

(30) Priorität: 29.09.2000 DE 10048256
(62) Teilanmeldung aus: 01986334.9
(71) Anmelder: Federal-Mogul Wiesbaden GmbH, 65201 Wiesbaden (DE)
(72) Erfinder: Klier, Hans-Jürgen, 65232 Taunusstein-Bleidenstadt (DE)
(74) Vertreter: Fuchs Mehler Weiss & Fritzsche

(57) **Zusammenfassung**

Die Erfindung betrifft ein Kurbelwellenlager mit einem Kurbelgehäuse und einem darin angeordneten Bundlager mit zwei Bundlagerhalbschalen (1', 1"), von denen jede eine Lagerschale (2, 2', 2") aufweist, wobei mindestens eine Lagerschale (2, 2', 2") über zwei auf dieser Lagerschale (2, 2', 2") angeordneten Anlaufscheiben (3, 3a', 3b', 3a", 3b") verfügt, wobei das Kurbelgehäuse einen der Bundlagerhalbschale (1', 1") gegenüberliegenden Kurbelgehäuseteil aufweist, welches dadurch gekennzeichnet ist, dass sich die Enden (7, 7', 7") der beiden Anlaufscheiben (3, 3a', 3b', 3a", 3b") der mindestens einen Lagerschale (2, 2', 2') zumindest teilweise über die Lagerschale (2, 2', 2") in Umfangsrichtung hinaus erstrecken und in das gegenüberliegende Kurbelgehäuseteil eingreifen.

## Beschreibung

Die Erfindung betrifft ein Kurbelwellenlager mit den Merkmalen des Oberbegriffs des Anspruchs 1.

Bundlager werden beispielsweise in Verbrennungskraftmaschinen zur Lagerung der Kurbelwelle im Kurbelgehäuse eingesetzt. Aufgrund der Kröpfungen der Kurbelwelle sind die Bundlager im Hinblick auf eine durchzuführende Montage grundsätzlich zweiteilig in Form von zwei Bundlagerhalbschalen ausgebildet. Anzutreffen sind zwar auch modular aufgebaute und zerlegbare Kurbelwellen, die den Einsatz von einteiligen Bundlagern zulassen, aber in der Massenfertigung insbesondere aufgrund der hohen Fertigungskosten in der Massenfertigung immer noch die Ausnahme.

Die Lagerschale dient zur Aufnahme von radialen Lagerkräften, welche über die sich in der Lagerschale drehende Welle eingeleitetet werden, wohingegen die mindestens eine Anlaufscheibe zur Aufnahme von axialen Kräften dient. Sind in beide Richtungen der Welle axiale Kräfte auszunehmen, müssen zwei Anlaufscheiben vorgesehen werden, da jeweils eine Anlaufscheibe nur in der Lage ist, die auf ihre Gleitschicht hin gerichteten Kräfte aufzunehmen. Dabei sind auf der Welle Wangen vorzusehen, über die sich die Welle an der Anlaufscheibe abstützt.

In der Regel verfügt die Kurbelwellen-Lagerung über mehrere Radial-Gleitlager, d.h. über mehrere Lager, die keine Anlaufscheiben aufweisen, und über ein kombiniertes Radial-Axial-Gleitlager. Dieses Radial-Axial-Gleitlager verfügt dann über die zur Aufnahme von Axialkräften notwendigen Anlaufscheiben. Im Folgenden wird auf das kombinierte Radial-Axial-Gleitlager Bezug genommen, da diese Bauart des Gleitlagers im Wesentlichen den Gegenstand der Erfindung bildet.

Die üblicherweise in Form von zwei Bundlagerhalbschalen zweiteilig ausgebildeten Bundlager werden in der Art im Kurbelgehäuse vormontiert, dass vor Einsetzen der Kurbelwelle die obere Bundlagerhalbschale in der oberen Gehäusehälfte des Kurbelgehäuses und die untere Bundlagerhalbschale in der unteren Gehäusehälfte - dem so genannten Gehäusedeckel - des Kurbelgehäuses platziert wird.

Die obere Gehäusehälfte des Kurbelgehäuses ist der Teil des Kurbelgehäuses, der mit dem Motorblock verbunden ist, d.h. der Teil des Kurbelgehäuses, der zwischen der Kurbelwelle und dem Zylinderkopf angeordnet ist. Bei der oberen Gehäusehälfte handelt es sich - wie im übrigen bei dem gesamten Kurbelgehäuse - im wesentlichen um ein Gussteil, welches nachbearbeitet wird und für die Aufnahme der oberen Bundlagerhalbschale einen Lagersattel aufweist, auf die die obere Bundlagerhalbschale im Rahmen der Montage eingesetzt wird.

In der Regel verfügt die obere Bundlagerhalbschale über eine Bohrung, durch die das Gleitlager mit Öl versorgt wird. Das Öl selbst wird mittels Zuleitungen bis in die Lagersättel des Kurbelgehäuses geführt. Folglich ist beim Einbau der oberen Bundlagerhalbschale darauf zu achten, dass die Ölversorgüngsbohrung der Lagerschale beim Einsetzen der oberen Bundlagerhabschale mit dem Austritt der Ölversorgungsleitung im Lagersattel fluchtet. Eine mittige und damit symmetrische Anordnung der Bohrung ist nicht zielführend, da aufgrund der Druckverteilung im Schmierölfilm des Gleitlagers die Versorgungsbohrung in der Regel exzentrisch angeordnet werden muss. Eine falsche Positionierung der oberen Bundlagerhalbschale im Lagersattel und damit ein Verschließen der Ölversorgungsleitung führt zu einer unzureichenden Ölversorgung des Gleitlagers und im schlimmsten Fall zum Trockenlauf des Lagers und der Lagerzerstörung.

Aus diesem Grunde werden als Montagehilfe Montagehilfsmittel vorgesehen. In der Praxis üblich ist die Anordnung eines nasenförmigen, nach außen vorstehenden Nockens auf der äußeren Umfangsmantelfläche der Lagerschale, wobei eine zu diesem Nocken korrespondierende Ausnehmung im Lagersattel des Kurbelgehäuses vorgesehen wird. Die Bundlagerhalbschale mit ihrem nach außen hervorstehenden Nocken ist nur dann im Lagerstuhl passgenau montierbar, wenn Nocken und Ausnehmung ineinander greifen, d.h. die Ölversorgungsbohrung der Lagerschale mit der Austrittsöffnung der Ölversorgungsleitung im Lagersattel fluchtet und die Bundlagerhalbschale ihre einbaugemäße Orientierung aufweist.

Die Ausbildung der Montagehilfe als Nocken und dazu korrespondierende Ausnehmung ist aufgrund des durchzuführenden Fertigungsprozesses aufwendig und erfordert mehrere Arbeitsschritte. Der nach außen hervorstehende Nocken wird im Rahmen eines Prägevorganges generiert. Das dabei sich lösende Gleitlagermaterial der Lagerschale muss sorgfältig entfernt werden, damit such lösende Partikel nach beendeter Montage und Betrieb der Verbrennungskraftmaschine nicht zu einem Lagerfresser führen.

Die untere Bundlagerhalbschale ist, abgesehen von der fehlenden Ölversorgungsbohrung, ähnlich ausgebildet wie die obere Bundlagerhalbschale. Auch sie verfügt über einen Nocken als Montagehilfe.

Die untere Bundlagerhalbschale des Bundlagers wird im Kurbelgehäusedeckel angeordnet. Hierfür ist im Gehäusedeckel der Lagerdeckel zur Aufnahme der unteren Bundlagerhalbschale vorgesehen. Der Lagerdeckel bildet zusammen mit dem im oberen Gehäuseteil angeordneten Lagersattel die Lageraufnahme des Bundlagers, wobei der Lagersattel die obere Bundlagerhalbschale und der Lagerdeckel die untere Bundlagerhalbschale aufnimmt.

Nach dem Vormontieren, d.h. dem Einsetzen der beiden Bundlagerhalbschalen in den oberen Gehäuseteil bzw. Den Gehäusedeckel und Durchführung der übrigen Vorarbeiten wird der obere Gehäuseteil mit dem Gehäusedeckel zusammengefügt und verschraubt, um so ein geschlossenes Kurbelgehäuse zu bilden.

Die beiden Kurbelgehäuseteile verfügen in der Regel nicht über irgendwelche Zentriervorrichtungen, die die relative Lage dieser beiden Bauteile zueinander fest determiniert. Die im Kurbelgehäuse vorgesehenen Schraubenverbindungen, welche den Gehäusedeckel mit dem oberen Gehäuseteil fest verbinden, haben prinzipbedingt ein Spiel und können schon aus diesem Grunde nicht als Zentriervorrichtung dienen, so dass der Gehäusedeckel gegenüber dem oberen Gehäuseteil bei schon eingedrehten, aber noch nicht festgezogenen Schrauben bewegliche ist, insbesondere in Richtung der Kurbelwellenachse um bis zu einigen Zehnteln Millimetern beweglich ist.

Das zweiteilige, aus dem oberen Gehäuseteil und dem Gehäusedeckel bestehende Kurbelgehäuse ist üblicherweise gerade geteilt, d.h. der Lagerdeckel und der Lagersattel, welche zusammen die Lageraufnahme für das Bundlager bilden, verfügen jeweils über eine halbkreisförmige, sich über einen Winkel von 180° erstreckende Ausnehmung, in welche die Bundlagerhalbschalen eingesetzt werden. Diese Bundlagerhalbschalen sind ebenfalls in der Regel gerade geteilt und erstrecken sich über einen Winkel von 180°.

Ist nun - wie bereits erläutert - aufgrund einer fehlenden Zentriervorrichtung der Gehäusedeckel gegenüber dem oberen Gehäuseteil in Richtung der Kurbelwellenachse verschiebbar und nicht zentriert, ist auch die untere Bundlagerhalbschale gegenüber der oberen Bundlagerhalbschale verschiebbar. Keine der beiden Bundlagerhalbschalen wird gezielt im Hinblick auf die ihr gegenüberliegende Bundlagerhalbschale ausgerichtet und fixiert.

Sind die beiden Bundlagerhalbschalen in axialer Richtung versetzt angeordnet, so liegen die beiden links von der Lagerbohrung bzw. die beiden rechts von der Lagerbohrung angeordneten Anlaufscheiben nicht in einer Ebene, so dass zum einen das Lager nur auf der axial weiter hervorstehenden Anlaufscheibe Kräfte aufnimmt bzw. seine Aufgabe, die Kurbelwelle in axialer Richtung zu führen und zu stützen, wahrnimmt. Zum anderen kann es zu Überbelastungen des nur partiell beanspruchten Lagers kommen.

Aus der DE-U-87 12 192 ist ein Bundlager mit einem insbesondere halbschalig ausgebildeten Radiallagerteil und einem Axiallagerteil bekannt, wobei das Axiallagerteil an zumindest einer der Stirnseiten des Radiallagerteils angeordnet ist und zumindest einen Abschnitt aufweist, der in Umfangsrichtung über die Trennebene des Lagers vorspringt. Dieser Vorsprung dient dazu, eine vergrößerte Tragfläche des Axiallagerteils zu bilden, wodurch die auf dieses wirkende Flächenbelastung reduziert werden kann.

Aufgabe der vorliegenden Erfindung ist es, ein Kurbelwellenlager mit einem Bundlager zu schaffen, welches die Montage des Kurbelwellenlagers mit einfachen Mitteln erleichtert, und welches sicherstellt, daß die beiden Bundlagerhalbschalen eines Bundlagers im eingebauten Zustand miteinander fluchten.

Gelöst wird diese Aufgabe durch ein Kurbelwellenlager mit den Merkmalen des Anspruchs 1.

Dadurch, dass sich die Enden der Anlaufscheiben mindestens einer Lagerschale über die halbkreisförmige Lagerschale in Umfangsrichtung hinaus erstrecken, greift eine in einem Kurbelgehäuseteil angeordnete Bundlagerhalbschale mit ihren Anlaufscheiben in das gegenüberliegende Kurbelgehäuseteil.

Beispielsweise greift eine im oberen Gehäuseteil angeordnete Bundlagerhalbschale mit ihren erfindungsgemäß ausgebildeten Anlaufscheiben fingerartig in den Gehäusedeckel. Damit ist die Bundlagerhalbschale selbst durch den im oberen Gehäuseteil angeordneten Lagersattel in axialer Richtung nahezu fixiert, wobei in der Regel für die Kombination Lagerhalbschale-Lagersattel eine Spielpassung gewählt wird, in der Art, dass der zwischen den Anlaufscheiben der Lagerhalbschale aufgenommene Lagersattel noch von Hand bewegbar ist, d.h. zwischen Lagersattel und den ihn aufnehmenden Anlaufscheiben ein Spiel von beispielsweise 20 µm bis 50 µm vorliegt.

Die Enden der erfindungsgemäß ausgebildeten Anlaufscheiben dieser am Lagersattel aufgenommenen Bundlagerhalbschale greifen in den Gehäusedeckel ein und fixieren den im Gehäusedeckel angeordneten Lagerdeckel zwischen sich. Dadurch wird der mit dem Lagerdeckel starr verbundene Gehäusedeckel des Kurbelgehäuses ebenfalls fixiert. Es greifen jeweils rechts und links von der eigentlichen Lagerbohrung bzw. Von der Kurbelwellenachse die benachbarten Enden der gegenüberliegenden Anlaufscheiben in der Art einer Gabel in den Lagerstuhl bzw. Lagerdeckel ein und fixieren damit den Lagerstuhl bzw. Eine zum Lagerstuhl gehörende Wandung.

Der Lagerdeckel weist im Hinblick auf die beiden rechts und links von ihm angeordneten Anlaufscheiben eine Fertigungstoleranz auf, mit der sich eine Spielpassung für die Kombination Lagerhalbschale-Lagerdeckel ergibt - wie im Zusammenhang mit dem Lagersattel bereits erläutert. Zwischen dem Lagerdeckel und den ihn rechts und links begrenzenden Anlaufscheiben stellt sich beispielsweise ein geringes Spiel ein, welches beispielsweise eine Größenordnung von 20 µm bis 50 µm aufweist.

Durch das Bundlager, bei dem sich die Enden der beiden Anlaufscheiben mindestens einer Lagerschale zumindest teilweise über die halbkreisförmige Lagerschale in Umfangsrichtung hinaus erstrecken, wird mit einfachen Mitteln eine ausreichend genaue Zentrierung des Gehäusedeckels auf dem oberen Gehäuseteil des Kurbelgehäuses realisiert, wobei eine Toleranz erreicht wird, die beispielsweise in dem oben genannten Zahlenbeispiel 20 µm bis 50 µm beträgt. D.h. der Gehäusedeckel wird mit einer maximalen Abweichung von 50 µm in axialer Richtung von einer vorgegebenen Soll-Position am oberen Gehäuseteil fixiert.

Die am Beispiel der oberen Bundlagerhalbschale ausgeführten Erläuterungen gelten für die untere Bundlagerhalbschale in gleicher Weise, wobei diese Lagerhalbschale dann im unteren Gehäuseteil sitzt und mit ihren Anlaufscheiben gabelförmig die Lagersättel zwischen sich fixiert und damit den oberen Gehäuseteil gegenüber dem unteren Gehäuseteil zentriert.

Günstig sind Ausführungsformen, bei denen die Anlaufscheiben an der Lagerschale angeschweißt sind.

Das Bundlager macht es nicht erforderlich, zusätzliche Mittel vorzusehen, die eine Zentriervorrichtung bilden, sondern nutzt hierzu bereits vorhandene Bauteile, indem eine an sich bekannte Anlaufscheibe erfindungsgemäß weitergebildet wird. Damit sind bei der Montage keine zusätzlichen Teile zu montieren, in der Fertigung grundsätzlich keine zusätzlichen Teile zu bevorraten, so dass die Produktion, insbesondere die Montage weder aufwendiger noch kostenintensiver wird bei gleichzeitiger Qualitätssteigerung der hergestellten Verbrennungskraftmaschine.

Mit dem Bundlager wird zum einen eine Zentrierung des Gehäusedeckels am oberen Gehäuseteil ermöglicht. Zum anderen wird sichergestellt, dass die beiden Lagerhalbschalen im eingebauten Zustand miteinander fluchten.

Die aus dem Stand der Technik bekannten Nachteile, welche bei Fehlen einer Zentriervorrichtung für die beiden Kurbelgehäuseteile in Erscheinung treten, können eliminiert bzw. gemindert werden. Die Anlaufscheiben der sich gegenüberliegenden Lagerschalen fluchten jeweils miteinander, d.h. die beiden in axialer Richtung rechts vom Bundlager bzw. links vom Bundlager angeordneten Anlaufscheiben liegen mit ihren Laufflächen annähernd in einer Ebene.

Vorteilhaft sind Bundlager, bei denen sich nur die Enden der beiden Anlaufscheiben einer Lagerschale zumindest teilweise über die halbkreisförmige Lagerschale in Umfangsrichtung hinaus erstrecken.

Vorteilhaft an dieser Ausführungsform des Bundlagers ist, dass die Zentrierung der beiden Kurbelgehäuseteile von nur einer Lagerschale bewerkstelligt wird, so dass die zweite Lagerschale, die der zentrierenden Lagerschale gegenüberliegt, nicht im Hinblick auf die zu lösende Aufgabe, d.h. nicht im Hinblick auf die Zentrierung ausgebildet werden muss.

Folglich kann es sich bei der zweiten Lagerschale um eine Lagerschale nach dem Stand der Technik handeln, so lange sie derart ausgebildet ist, dass sie mit der erfindungsgemäß ausgebildeten Bundlagerhalbschale zusammen ein Bundlager bilden kann. Insbesondere besteht die Möglichkeit, als zweite Lagerschale eine Lagerschale ohne Anlaufscheiben vorzusehen. Dabei erden sich die Anlaufscheiben der zentrierenden Lagerschale vorzugsweise soweit wie möglich in Umfangsrichtung erstrecken, um eine möglichst große Gleitfläche für das Axial-Gleitlager auszubilden. Eine Grenze wird lediglich dadurch gebildet, dass die Kurbelwelle - in Abhängigkeit ihres Kurbelwellendurchmessers - noch in die so ausgebildete zentrierende Lagerschale integriert bzw. eingelegt werden muss.

Vorteilhaft sind auch Ausführungsformen des Bundlagers, bei denen sich die Enden der beiden Anlaufscheiben beider Lagerschalen zumindest teilweise über die halbkreisförmige Lagerschale in Umfangsrichtung hinaus erstrecken.

Vorteilhaft an dieser Ausführungsform ist, dass die Anlaufscheiben beider Lagerschalen nun die Zentriervorrichtung bilden und gemeinsam Gehäuseoberteil und Gehäusedeckel des Kurbelgehäuses zentrieren. Dadurch ist es möglich, eine nahezu über 360° geschlossene Gleitfläche für das Axial-Gleitlager zur Verfügung zu stellen. Die so maximierte Lauffläche des Axial-Gleitlagers führt dann - gleiche axiale Belastungen vorausgesetzt - zu einer geringeren spezifischen Flächenpressung.

Diese Ausführungsform hat des weiteren den Vorteil, dass die axialen Kräfte, welche unter Umständen auf die Zentriervorrichtung von den gefügten Kurbelgehäuseteilen ausgeübt werden, auf mehr Anlaufscheiben verteilt wird.

Vorteilhaft sind Ausführungsformen des Bundlagers, bei denen mindestens ein erstes Ende einer Anlaufscheibe einer ersten Lagerschale erste Montagehilfsmittel aufweist und ein zweites Ende einer Anlaufscheibe einer zweiten Lagerschale, welches beim montierten Bundlager dem ersten Ende gegenüberliegt und sich mit diesem im Eingriff befindet, zu den ersten Montagehilfsmitteln komplementäre Montagehilfsmittel verfügt, in der Art, dass sich das Bundlager nur fügen lässt, wenn die Bundlagerhalbschalen einbaugemäß orientiert sind.

Günstig an dieser Ausführungsform ist, dass mittels von vorgesehenen Montagemitteln, die Bestandteil der Bundlagerhalbschalen selbst sind, eindeutig bestimmt werden kann, ob die beiden Lagerschalen relativ zueinander richtig positioniert sind. Folglich genügt die vorschriftsmäßige Montage einer Lagerhalbschale, wobei diese montierte Lagerhalbschale eine Einbauvorschrift für die zweite noch zu montierende Lagerhalbschale vorgibt. D.h. aufgrund der vorgesehenen Montagehilfsmittel sind die beiden Lagerhalbschalen nur in einer bestimmten Anordnung fügbar.

Folglich kann darauf verzichtet werden, an der zweiten Lagerhalbschale Hilfsmittel vorzusehen, die unabhängig von der ersten Lagerhalbschale als Indikator für die richtige Positionierung der zweiten Lagerhalbschale dienen. In der Praxis weit verbreitet ist - wie eingangs im Zusammenhang mit dem Stand der Technik bereits ausgeführt - die Anordnung eines nach außen hervorstehenden Nockens, der auf der äußeren Umfangsmantelfläche der Lagerhalbschale angeordnet ist und im montierten Zustand in eine zu dem Nocken korrespondierende Ausnehmung der Lagerbohrung eingreift.

Einen derartigen Nocken an der zweiten Lagerschale vorzusehen ist aufgrund der integrierten Montagehilfsmittel nicht mehr notwendig, wodurch insbesondere Kosten gesenkt werden.

Vorteilhaft sind Ausführungsformen des Bundlagers, bei denen die Montagehilfsmittel in Form von Abschrägungen ausgebildet sind. Diese Montagehilfsmittel lassen sich auf einfache Weise fertigen, wobei eine Abschrägung der Enden der Anlaufscheiben teilweise auch schon bei Bundlagern nach dem Stand der Technik erfolgt, allerdings ohne dabei die Abschrägungen im Sinne der vorliegenden Erfindung als Montagehilfsmittel auszubilden und zu benutzen.

Vorteilhaft sind Ausführungsformen des Bundlagers, bei denen die Abschrägungen in der Art ausgebildet sind, dass sich der innere Radius oder der äußere Radius der Anlaufscheibe in Umfangsrichtung kontinuierlich ändert. Die Anlaufscheibe verjüngt sich dabei zu ihrem Ende hin, wobei die Dicke der Anlaufscheibe vorzugsweise gleich bleibt.

Vorteilhaft sind Ausführungsformen des Bundlagers, bei denen die Abschrägungen in der Art ausgebildet sind, dass sich die Dicke der Anlaufscheibe zum Ende der Anlaufscheibe hin in Umfangsrichtung kontinuierlich ändert. Dabei kann sowohl die Innenfläche der Anlaufscheibe als auch die Außenfläche der Anlaufscheibe unverändert bleiben und die Dicke an der Innenfläche anfangend abnehmen.

Vorteilhaft sind Ausführungsformen des Bundlagers, bei denen die Montagehilfsmittel auf einer Seite jeder Lagerschale identisch sind und sich von den Montagehilfsmitteln auf der anderen Seite dieser Lagerschale unterscheiden.

Durch diese Maßnahme ist sichergestellt, dass sich eine um 180° aus der Montageposition gedrehte Lagerschale nicht mit der ihr gegenüberliegenden richtig orientierten Lagerschale fügen lässt.

Günstig sind Ausführungsformen des Bundlagers, bei denen mindestens eine Anlaufscheibe über eine nach außen vorstehende, in der Ebene der Anlaufscheibe liegende Nase verfügt.

Eine der beiden Bundlagerhalbschalen ist vorzugsweise mit einem Hilfsmittel zu versehen, welches die richtige Orientierung dieser Lagerschale beim Einbau sicherstellt. Im Gegensatz zu den Lagerschalen nach dem Stand der Technik, die üblicherweise einen Nocken an der Lagerschale und eine Ausnehmung in der Lagerbohrung vorsehen, welche im montierten Zustand ineinander greifen, wird bei dem erfindungsgemäßen Bundlager eine Einbauhilfe in Form einer nach außen vorstehenden, an einer Anlaufscheibe angeordneten Nase vorgesehen.

Zur Aufnahme dieser Nase wird vorzugsweise schon bei der konstruktiven Auslegung des Kurbelgehäuses eine Ausnehmung zur Aufnahme dieser Nase eingeplant, so dass diese Ausnehmung in der Regel bereits Bestandteil des gegossenen Kurbelgehäuses ist.

Vorteilhaft sind Ausführungsformen des Bundlagers, bei denen die mindestens eine Anlaufscheibe an ihrer Außenfläche Nuten aufweist, die die Außenfläche in der Art einer Sekante schneiden. Diese Nuten sind erforderlich, um auf der Anlaufscheibe einen tragenden Schmierfilm auszubilden und um Öl abzuführen.

Ebenfalls zur Erfindung gehört eine Anlaufscheibe für eine Bundlagerhalbschale, die als Ringsegment ausgebildet ist und welche dadurch gekennzeichnet ist, dass sie sich über einen Winkel von mehr als 180° erstreckt. Ein Paar derartiger Anlaufscheiben löst zusammen mit einer entsprechenden Lagerschale als kombiniertes Bundlager die der Erfindung zugrunde liegende Aufgabe. Die besondere konstruktive Ausgestaltung der erfindungsgemäßen Anlaufscheibe ist als Kern der vorliegenden Erfindung zu betrachten.

Vorteilhaft sind Ausführungsformen der Anlaufscheibe, die über eine nach außen vorstehende, in der Ebene der Anlaufscheibe liegende Nase verfügen.

Die Erfindung wird im Folgenden anhand von zwei Ausführungsbeispielen gemäß den Zeichnungsfiguren 1 und 2 näher erläutert. Hierbei zeigt:
- Fig. 1: eine erste Ausführungsform einer Bundlagerhalbschale in der perspektivischen Darstellung, und
- Fig. 2: eine zweite Ausführungsform eines Bundlagers in der perspektivischen Darstellung mit den das Bundlager bildenden beiden Bundlagerhalbschalen.

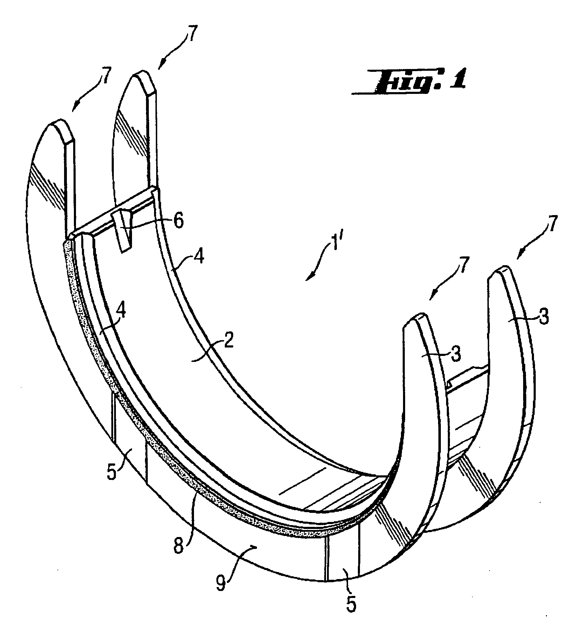

Fig. 1 zeigt eine erste Ausführungsform einer Bundlagerhalbschale 1' in der perspektivischen Darstellung. Die Bundlagerhalbschale 1'verfügt über eine Lagerschale 2 und zwei auf dieser Lagerschale 2 angeordnete Anlaufscheiben 3. Dabei sind die Anlaufscheiben 3 auf der äußeren Umfangsmantelfläche der Lagerschale 2 angeschweißt in der Art, dass die Anlaufscheiben 3 idealerweise senkrecht zur Achse des Bundlagers bzw. Senkrecht zu der Achse der von dem Bundlager zu tragenden Kurbelwelle stehen. Die Anlaufscheiben 3 sind dabei an den Rändern bzw. Stirnseiten der Lagerschale 2 angeordnet. Gut zu erkennen ist die Schweißnaht 8, über welche die vordere Anlaufscheibe 3 mit der Lagerschale 2 verbunden ist.

Die vier Enden 7 der beiden Anlaufscheiben 3 erstrecken sich über die halbkreisförmige Lagerschale 2 in Umfangsrichtung hinaus. Dabei bilden die benachbarten Enden 7 der gegenüberliegenden Anlaufscheiben 3 jeweils eine Art Gabel. Wird nun die in Fig. 1 dargestellte Bundlagerhalbschale 1', welche keine Ölversorgungsbohrung aufweist und für die Anordnung im Gehäusedeckel des Kurbelgehäuses vorgesehen ist, in einem im Gehäusedeckel angeordneten Lagerdeckel montiert, so greifen die Enden 7 der Anlaufscheiben 3 im montierten Zustand des Kurbelgehäuses in den oberen Gehäuseteil des Kurbelgehäuses. Dabei greifen die gabelförmig ausgebildeten Enden 7 der Anlaufscheiben 3 in den Lagersattel, auf dem die gegenüberliegende Bundlagerhalbschale 1" (nicht dargestellt) platziert ist, wobei der Lagersattel bzw. Eine zum Lagersattel gehörende Wandung zwischen den Anlaufscheiben 3 fixiert wird. Damit wird eine Zentrierung der beiden Kurbelgehäuseteile zueinander erreicht.

Ein Bundlager, welches die in Fig. 1 dargestellte Bundlagerhalbschale 1' verwendet, bewerkstelligt die Zentrierung der beiden Kurbelgehäuseteile mit nur einer, nämlich der dargestellten Bundlagerhalbschale 1'. Eine zweite Lagerschale, die der zentrierenden Bundlagerhalbschale 1'gegenüberliegt, kann eine nach dem Stand der Technik ausgebildete Lagerschale sein, so lange sie derart ausgebildet ist, dass sie mit der erfindungsgemäß ausgebildeten Bundlagerhalbschale 1' zusammen ein Bundlager bilden kann. Insbesondere besteht die Möglichkeit, als zweite Lagerschale eine Lagerschale ohne Anlaufscheiben vorzusehen, da die dargestellte Bundlagerhalbschale 1' über großflächige Anlaufscheiben 3 verfügt. Diese Anlaufscheiben 3 bilden eine Außenfläche 9, die für sich genommen ohne Hinzutreten einer weiteren Anlaufscheibe einer zweiten Lagerschale eine genügend große Gleitlagerfläche bildet. Die Außenfläche 9 der Anlaufscheiben 3 verfügt über zwei Nuten 5, die die Außenfläche 9 in der Art einer Sekante schneiden. Diese Nuten 5 sind erforderlich, um einen ausreichend tragfähigen Schmierfilm im Axial-Gleitlager aufzubauen und um Öl abzuführen.

Die in Fig. 1 dargestellte bundlagerhalbschale 1' verfügt des Weiteren über eine in der Lauffläche der Lagerschale 2 angeordnete Nut 6. Diese Nut 6 erstreckt sich in Umfangsrichtung, d.h. in Richtung der Kurbelwellenrotation und dient als Ölreservoir zur Aufnahme von Schmieröl.

Darüber hinaus weist die Lagerschale 2 an ihren Rändern sich in Umfangsrichtung erstreckende Nuten 4 auf, welche die Flexibilität der Lagerschale 2 und damit der gesamten Bundlagerhalbschale 1'erhöhen.

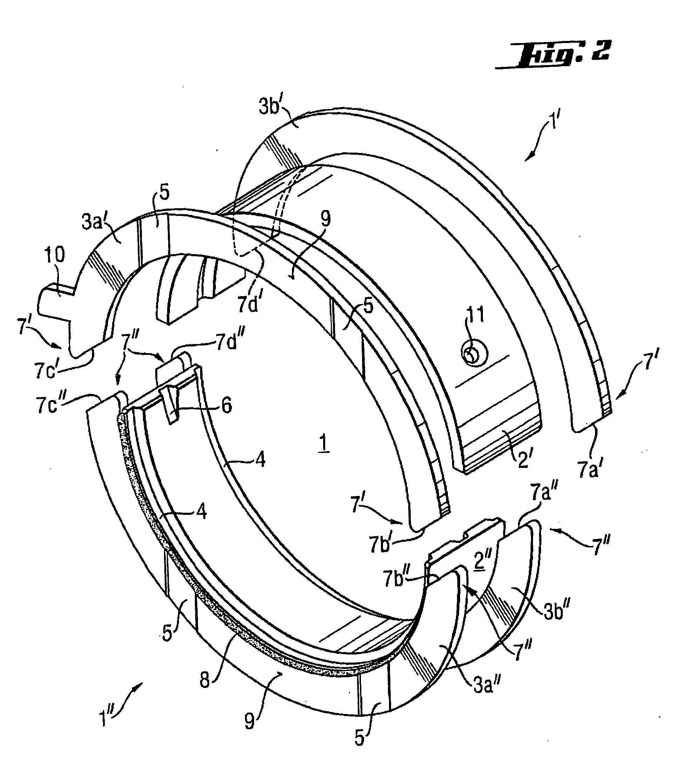

Fig. 2 zeigt eine Ausführungsform des Bundlagers 1, bei der beide Lagerschalen 2', 2" jeweils über zwei Anlaufscheiben 3a', 3b', 3a", 3b" verfügen.

Die obere Bundlagerhalbschale 1' ist dabei explosionsartig in der perspektivischen Ansicht dargestellt, mit nicht an der Lagerschale 2' befestigten Anlaufscheiben 3a', 3b'. Die untere Bundlagerhalbschale 1" ist im gefügten Zustand als endbearbeitetes Bauteil dargestellt.

Diese untere Bundlagerhalbschale 1" ist der in Fig. 1 dargestellten Bundlagerhalbschale sehr ähnlich. Ihre Anlaufscheiben 3a", 3b" sind auf der äußeren Umfangsmantelfläche der Lagerschale angeordnet und über eine Schweißnaht 8 mit der Lagerschale 2" unlösbar verbunden. Sie stehen wiederum senkrecht zur Bundlagerachse und sind an den Stirnseiten der Lagerschale 2" angeordnet.

Die Enden 7" der Anlaufscheiben 3a", 3b" erstrecken sich in Umfangsrichtung aber nur teilweise über die halbkreisförmige Lagerschale hinaus. Darüber hinaus weisen die Enden 7" dieser beiden Anlaufscheiben 3a", 3b" Montagehilfsmittel 7a', 7b", 7c", 7d" in Form von Abschrägungen der Enden 7" der Anlaufscheiben 3a", 3b" auf.

Die obere Bundlagerhalbschale 1' ist bei der in Fig. 2 dargestellten Ausführungsform des Bundlagers 1 mit Ausnahme von zwei konstruktiven Elementen wie die untere Bundlagerhalbschale 1" ausgebildet.

Ein weiteres konstruktives Element, welches die obere Bundlagerhalbschale 1' im Gegensatz zu der unteren Bundlagerhalbschale 1" aufweist, ist die exzentrisch in der Lagerschale 2' angeordnete Ölversorgungsbohrung 11, über welche das Bundlager 1 mit Schmieröl versorgt wird. Diese Ölversorgungsbohrung 11 muss mit dem Austritt der Ölversorgungsleitung in der Lagerbohrung fluchten, so dass die obere Bundlagerhalbschale 1' nicht beliebig auf dem im oberen Gehäuseteil des Kurbelgehäuses angeordneten Lagersattel montiert werden kann.

Als Montagehilfe für die Montage der oberen Bundlagerhalbschale 1' ist an der vorderen Anlaufscheibe 3a' eine nach außen hervorstehende, in der Ebene der Anlaufscheibe liegende Nase 10 angeordnet. Diese Nase 10 greift bei richtig positionierter Bundlagerhalbschale 1' in eine zu ihr korrespondierende Ausnehmung, welche an der Lageraufnahme bzw. Am Lagersattel im Kurbelgehäuse vorzusehen ist. Mit Hilfe dieser Nase wird gewährleistet, dass die obere Bundlagerhalbschale 1' nur in einer vorgegebenen Lage montierbar ist.

Die Enden 7' der Anlaufscheiben 3a', 3b' der oberen Bundlagerhalbschale 1' weisen erste Montagehilfsmittel 7a', 7b', 7c', 7d' auf, die im montierten Bundlager 1 mit den Montagehilfsmitteln 7a", 7b", 7c", 7d", welche an den Enden 7"' der Anlaufscheiben 3a", 3b" der unteren Bundlagerhalbschale 1" angeordnet sind, in Eingriff stehen.

Die Montagehilfsmittel 7a', 7b', 7c', 7d' der oberen Lagerhalbschale 1' sind ebenfalls in Form von Abschrägungen ausgebildet. Wie bei der unteren Bundlagerhalbschale 1" sind die Abschrägungen auf einer Seite der Lagerschale 2', 2" gleich orientiert, d.h. identisch und in Bezug auf die Abschrägungen auf der anderen Seite dieser Lagerschale 2', 2" anders orientiert, d.h. unterschiedlich.

Die Abschrägungen sind in der Art ausgebildet, dass sich der innere Radius oder der äußere Radius der Anlaufscheibe 3a', 3b', 3a", 3b" in Umfangsrichtung kontinuierlich ändert. Die Anlaufscheiben 3a', 3b', 3a", 3b" verjüngen sich dabei zu ihrem Ende 7', 7" hin, wobei die Dicke der Anlaufscheiben 3a', 3b', 3a", 3b" vorzugsweise gleich bleibt.

Die in die obere Gehäusehälfte des Kurbelgehäuses eingefügte obere Bundlagerhalbschale 1' beinhaltet quasi eine Einbauvorschrift für die untere Bundlagerhalbschale 1". Erfindungsgemäß lassen sich die beiden Bundlagerhalbschalen 1', 1" nur zu einem Bundlager 1 zusammenfügen, wenn die Bundlagerhalbschalen 1', 1" einbaugemäß orientiert sind, Dabei arbeiten die ersten Montagehilfsmittel 7a', 7b', 7c', 7d' der oberen Bundlagerhalbschale 1' mit den zweiten Montagehilfsmitteln 7a", 7b", 7c", 7d" der unteren Bundlagerhalbschale 1" nach dem Schlüssel-Schloss-Prinzip zusammen. Da die Montageposition der unteren Bundlagerhalbschale 1" durch die ihr gegenüberliegende obere Bundlagerhalbschale 1'vorgegeben wird, ist eine weitere Montagehilfe in Form einer Nase oder eines auf der Lagerschale anzuordnenden Nockens entbehrlich.

Die Anlaufscheiben 3a', 3b', 3a", 3b" verfügen in ihrer Außenfläche 9 jeweils über zwei Nuten 5, die zur Ausbildung eines tragfähigen Schmierfilms erforderlich sind.

Bei dem in Fig. 2 dargestellten Bundlager 1 erfolgt die Zentrierung der beiden Kurbelgehäuseteile zueinander über beide Bundlagerhalbschalen 1', 1 ". Die obere, im oberen Gehäuseteil angeordnete Bundlagerhalbschale 1' zentriert mit ihren Enden 7' der beiden Anlaufscheiben 3a', 3b', welche sich zumindest teilweise in Umfangsrichtung über die halbkreisförmige Lagerschale 2' hinaus erstrecken, den Gehäusedeckel gegenüber dem oberen Gehäuseteil des Kurbelgehäuses.

Die untere, im Gehäusedeckel angeordnete Bundlagerhalbschale 1" hingegen zentriert mit ihren Enden 7" der beiden Anlaufscheiben 3a", 3b", welche sich zumindest teilweise in Umfangsrichtung über die halbkreisförmige Lagerschale 2" hinaus erstrecken, den oberen Gehäuseteil gegenüber dem Gehäusedeckel. Beide Bundlagerhalbschalen 1', 2' übernehmen gemeinsam die Aufgabe einer Zentriervorrichtung.

### Bezugszeichenliste

- 1: Bundlager
- 1': Bundlagerhalbschale
- 1": Bundlagerhalbschale
- 2: Lagerschale
- 2': Lagerschale
- 2": Lagerschale
- 3: Anlaufscheibe
- 3a': Anlaufscheibe
- 3b': Anlaufscheibe
- 3a": Anlaufscheibe
- 3b": Anlaufscheibe
- 4: Nut
- 5: Nut
- 6: Nut
- 7: Ende
- 7': Ende
- 7": Ende
- 7a': erstes Montagehilfsmittel
- 7b': erstes Montagehilfsmittel
- 7c': erstes Montagehilfsmittel
- 7d': erstes Montagehilfsmittel
- 7a": zweites Montagehilfsmittel
- 7b": zweites Montagehilfsmittel
- 7c": zweites Montagehilfsmittel
- 7d": zweites Montagehilfsmittel
- 8: Schweißnaht
- 9: Außenfläche
- 10: Nase
- 11: Ölversorgungsbohrung

## Patentansprüche

1. Kurbelwellenlager mit einem Kurbelgehäuse und einem darin angeordneten Bundlager mit zwei Bundlagerhalbschalen (1', 1 "), von denen jede eine Lagerschale (2, 2', 2") aufweist, wobei mindestens eine Lagerschale (2, 2', 2") über zwei auf dieser Lagerschale (2, 2', 2") angeordneten Anlaufscheiben (3, 3a', 3b', 3a", 3b") verfügt, wobei das Kurbelgehäuse einen der Bundlagerhalbschale (1', 1") gegenüberliegenden Kurbelgehäuseteil aufweist,
**dadurch gekennzeichnet,**
**dass** sich die Enden (7, 7', 7") der beiden Anlaufscheiben (3, 3a', 3b', 3a", 3b") der mindestens einen Lagerschale (2, 2', 2') zumindest teilweise über die Lagerschale (2, 2', 2") in Umfangsrichtung hinaus erstrecken und in das gegenüberliegende Kurbelgehäuseteil eingreifen.

2. Kurbelwellenlager nach Anspruch 1,
**dadurch gekennzeichnet,**
**dass** sich nur die Enden (7) der beiden Anlaufscheiben (3) einer Lagerschale (2) zumindest teilweise über die halbkreisförmige Lagerschale (2) in Umfangsrichtung hinaus erstrecken.

3. Kurbelwellenlager nach Anspruch 1,
**dadurch gekennzeichnet,**
**dass** sich die Enden (7, 7', 7") der beiden Anlaufscheiben (3, 3a', 3b', 3a", 3b") beider Lagerschalen (2, 2', 2") zumindest teilweise über die halbkreisförmige Lagerschale (2, 2', 2") in Umfangsrichtung hinaus erstrecken.

4. Kurbelwellenlager nach Anspruch 3,
**dadurch gekennzeichnet,**
**dass** mindestens ein erstes Ende (3') einer Anlaufscheibe (3a', 3b') einer ersten Lagerschale (2') erste Montagehilfsmittel (7a', 7b', 7c', 7d') aufweist und ein zweites Ende (7") einer Anlaufscheibe (3a", 3b") einer zweiten Lagerschale (2"), welches beim montierten Bundlager (1) dem ersten Ende (7') gegenüberliegt und sich mit diesem im Eingriff befindet, über zweite zu den ersten Montagehilfsmitteln (7a', 7b', 7c', 7d') komplementäre Montagehilfsmittel (7a", 7b", 7c", 7d") verfügt, in der Art, dass sich das Bundlager (1) nur fügen lässt, wenn die Bundlagerhalbschalen (1',1 ") einbaugemäß orientiert sind.

5. Kurbelwellenlager nach Anspruch 4,
**dadurch gekennzeichnet,**
**dass** die Montagehilfsmittel (7a', 7b', 7c', 7d', 7a", 7b", 7c", 7d") in Form von Abschrägungen ausgebildet sind.

6. Kurbelwellenlager nach Anspruch 5,
**dadurch gekennzeichnet,**
**dass** die Abschrägungen in der Art ausgebildet sind, dass sich der innere Radius oder der äußere Radius der Anlaufscheibe (3, 3a', 3b', 3a", 3b") in Umfangsrichtung kontinuierlich ändert.

7. Kurbelwellenlager nach Anspruch 4,
**dadurch gekennzeichnet,**
**dass** die Montagehilfsmittel (7a", 7b") auf einer Seite jeder Lagerschale 2', 2") identisch sind und sich von den Montagemitteln (7c", 7d") auf der anderen Seite dieser Lagerschale (2', 2") unterscheiden.

8. Kurbelwellenlager nach einem der Ansprüche 1 bis 7,
**dadurch gekennzeichnet,**
**dass** mindestens eine Anlaufscheibe (3a') über eine nach außen vorstehende, in der Ebene der Anlaufscheibe (3a') liegende Nase (10) verfügt.
